# EUROPÄISCHE PATENTANMELDUNG

(11) **EP 1 313 289 A2**
(43) Veröffentlichungstag der Anmeldung: **21.05.2003**
(21) Anmeldenummer: 02090414.0
(22) Anmeldetag: 15.10.1999
(51) Int. Cl.: H04L 29/06

(54) **Verfahren zur Übertragung von Rückkanal-Daten in einer Verbindung zwischen einem Endgerät und einem Server eines Paketvermittlungsnetzes**

(30) Priorität: 15.10.1998 DE 19849281; 23.12.1998 DE 19860756
(62) Teilanmeldung aus: 99250365.6
(71) Anmelder: Teles AG Informationstechnologien, 10587 Berlin (DE)
(72) Erfinder: Schindler, Sigram, Prof. Dr., 14129 Berlin (DE); Wegener, Rochus, 13503 Berlin (DE); Illg, Andreas, 10555 Berlin (DE); Paetsch, Frank, 10961 Berlin (DE); Lüdtke, Karsten, 12167 Berlin (DE)
(74) Vertreter: Müller, Wolfram Hubertus, Dipl.-Phys.

(57) **Zusammenfassung**

Die Erfindung betrifft ein Verfahren zur Übertragung von Rückkanal-Daten in einer Verbindung zwischen einem Endgerät (1) und einem Server (4) eines Paketvermittlungsnetzes (3) und einen Switch (1) zur Durchführung des Verfahrens. Erfindungsgemäß ist vorgesehen, daß in Abhängigkeit von Steuersignalen des Nutzers des Endgerätes (1) oder eines Netzwerkmanagements an das Endgerät (1) zu übertragende Daten während einer bestehenden Verbindung wahlweise entweder schmalbandig über das Paketvermittlungsnetz und/oder POTS/ISDN-Leitungen oder breitbandig über einen Breitband-Rückkanal, insbesondere über Satellit (8) oder eine ADSL-Übertragungsstrecke, übertragen werden. Das Herunterladen großer Datenmengen an ein Endgerät (1) wird dadurch auf flexible und auf die Wünsche eines Nutzers eingehende Weise möglich.

## Beschreibung

Die Erfindung betrifft ein Verfahren zur Übertragung von Rückkanal-Daten in einer Verbindung zwischen einem Endgerät und einem Server eines Paketvermittlungsnetzes, wahlweise schmalbandig über das Paketvermittlungsnetz und/oder POTS/ISDN-Leitungen oder breitbandig über einen Breitband-Rückkanal, sowie einen Switch zur Durchführung des Verfahrens.

### Hintergrund der Erfindung

Zunehmend werden Satelliten als kostengünstiges Kommunikationsmedium eingesetzt. Die DVB Data Broadcasting Organisation hat im Frühjahr 1998 eine Data Broadcasting Spezifikation definiert, die ein schnelles Herunterladen von Daten aus dem Internet an einen Nutzer über Satellit vorsieht. Dabei werden die aus dem Internet herunterzuladenden Daten über einen Satelliten-Uplink an einen Satelliten gesendet, über einen Transponder des Satelliten ausgestrahlt und über eine Satellitenschüssel des Nutzers von diesem empfangen. Eine Satellitenübertragung stellt dabei eine sehr hohe Bandbreite zur Verfügung, etwa 38 Mbit/s.

Ein weitere breitbandige Übertragung, die zunehmend an Bedeutung gewinnt, ist die Überbrückung der "letzten Meile" von der Ortsvermittlungsstelle zum Endteilnehmer mittels ADSL-Technik. Dabei werden die zu übertragenden Daten breitbandig auf einer herkömmlichen Kupferleitung übertragen. Der Datenstrom wird aufgeteilt und auf eine Vielzahl von Kanälen aufmoduliert. Es lassen sich Bandbreiten zum Endteilnehmer von bis zu 8 Mbit/s realisieren.

Weiter werden Realisierungen der Teilnehmer-Anschluß-Leitungen mittels Fernsehkabel-Technik, Stromkabel-Technik und Mobilfunkstrecken diskutiert. Unter Teilnehmer-Anschluß-Leitung (TAL) wird dabei jedwede Verbindung zwischen einem Teilnehmerzugangs-Netz und einem seiner Teilnehmer verstanden.

Aus der DE-A1-196 45 368 ist ein Verfahren zur Übertragung von digitalen Daten in einem terrestrischen Telekommunikationsnetz bekannt, bei dem bei Vorliegen eines entsprechenden Steuersignals während einer bestehenden Verbindung ein Wechsel zwischen einer paketvermittelten und einer leitungsvermittelten Datenübertragung erfolgt.

Es besteht ein Bedürfnis nach Verfahren, die die bestehenden breitbandigen Techniken flexibel und an die Bedürfnisse eines Nutzers angepaßt zur Verfügung stellen.

### Aufgabe der Erfindung

Dementsprechend liegt der vorliegenden Erfindung die Aufgabe zugrunde, ein Verfahren zur Übertragung von Rückkanal-Daten in einer Verbindung zwischen einem Endgerät und einem Server eines Paketvermittlungsnetzes sowie einen Switch zur Durchführung des Verfahrens zur Verfügung zu stellen, die ein hohes Maß an Flexibilität bei der Wahl der Übertragungsmethode in Abhängigkeit von den Vorgaben eines Nutzer oder eines Netzwerkmanagements ermöglichen. Insbesondere soll der Nutzer die Möglichkeit haben, die Dienstequalität, insbesondere die Bandbreite einer Datenübertragung nach seinen Wünschen dynamisch festzulegen.

### Zusammenfassung der Erfindung

Diese Aufgabe wird erfindungsgemäß durch ein Verfahren mit den Merkmalen des Anspruchs 1 und einen Switch mit den Merkmalen des Anspruchs 23 gelöst. Bevorzugte und vorteilhafte Ausgestaltungen der Erfindung sind in den Unteransprüchen angegeben.

Danach erfolgt eine Rückkanal-Datenübertragung zumindest auf einer Teilstrecke des Rückkanals wahlweise entweder schmalbandig über das Paketvermittlungsnetz und/oder POTS/ISDN-Leitungen oder breitbandig über einen Breitband-Rückkanal oder beides, wobei der Server und/oder eine Steuereinheit, die Teil des Paketvermittlungsnetzes ist oder zu diesem Zugang hat, wiederholt prüfen, ob ein durch den Nutzer des Endgerätes oder ein Netzwerkmanagement ausgelöstes Steuersignal zum Wechseln auf den jeweils anderen Rückkanal bzw. die jeweils andere Übertragungsmethode vorliegt, und für diesen Fall während der bestehenden Verbindung ein Wechsel vorgenommen wird, wobei die Daten für den Breitband-Rückkanal vom Server über einen Breitband-Zugangsswitch geleitet werden. Dabei kann vorgesehen sein, daß die schmalbandige Verbindung beibehalten und nicht aufgegeben, der Breitband-Rückkanal also zugeschaltet wird.

Die erfindungsgemäße Lösung zeichnet sich dadurch aus, daß während einer bestehenden Verbindung in Abhängigkeit von den Vorgaben eines Nutzers oder eines Netzwerkmanagements ein Wechsel des Rückkanals oder eines Teils davon erfolgen kann, und zwar ein Wechsel zwischen einem schmalbandigen Rückkanal über ein paketvermitteltes Netz und/oder POTS/ISDN-Leitungen und einem Breitband-Rückkanal. Wie erwähnt, kann statt eines Wechsels auch ein Dazuschalten des Breitband-Rückkanals erfolgen. Dabei kann ein Nutzer entsprechend seinen Wünschen und Bedürfnissen dynamisch zwischen schmalbandiger und breitbandiger Übertragung der Rückkanal-Daten hin- und herschalten.

Unter "Verbindung" zwischen einem Endgerät und einem Server oder zwischen einem Endgerät und einem Switch wird im Rahmen dieser Erfindung eine Ebene 7 Verbindung (L7-Verbindung) gemäß dem OSI-Referenzmodell verstanden. Ein "Umschalten" zwischen verschiedenen Übertragungstechniken (paketvermittelt, über eine Satellitenstrecke, über eine ADSL-Strekke) erfolgt in den Ebenen 3 oder 4 des OSI-Referenzmodells (L3-Verbindung) oder darunter und tangiert die Ebene 7 Verbindung nicht. Insbesondere stellen Netzwerkprotokolle wie das Internet Protokoll IP/UDP oder IP/TCP im wesentlichen eine Ebene 3/4 Verbindung zur Verfügung.

Mit anderen Worten ermöglicht die Erfindung es einem Nutzer, während einer vorliegenden L7-Verbindung den Rückkanal oder einen Teil davon (insbesondere die schmalbandige Last-Mile) dynamisch zwischen Breitband-Kommunikation (L3/4-Verbindung) und schmalbandiger Kommunikation etwa über ein paketvermitteltes Netz (ebenfalls L3/4-Verbindung) hin und her zu schalten und damit die ihm für die Datenübertragung zur Verfügung stehende Dienstequalität (insbesondere die Bandbreite) zu wechseln. Eine niedrige Dienstgüte geht dabei mit entsprechend geringeren Kosten einher.

Gleichzeitig ermöglicht die vorliegende Erfindung durch sinnvolle Nutzung der vorhandenem hohen Bandbreiten breitbandiger Kommunikationssysteme wie der Satellitenkommunikation, daß nicht eine Vielzahl von Nutzern durch ihre schmalbandigen Anforderungen die Leistungsfähigkeit des breitbandigen Kommunikationssystems überlasten. Ein Breitband-Rückkanal sollte nur bei einer hohen erforderlichen Bandbreite der Datenübertragung, etwa bei Herunterladen großer Datenmengen, nicht jedoch beim üblichen "Surfen" im Internet verwendet werden.

"POTS" steht für "Plain Old Telephony System", das herkömmliche Telefonnetz. "ISDN" steht für "Integrated Services Digital Network", das standardisierte diensteintegrierende digitale Telefonnetz.

In einer bevorzugten Ausgestaltung des erfindungsgemäßen Verfahrens ist die Steuereinheit gleich dem Breitband-Zugangsswitch (im folgenden als Switch bezeichnet) und wird eine Verbindung zwischen dem Endgerät und dem Server stets unter Zwischenschaltung des Switches hergestellt. Dementsprechend ist es ausreichend, daß allein der Switch prüft, ob ein durch den Nutzer des Endgerätes oder ein Netzwerkmanagement ausgelöstes Steuersignal zum Übergang auf eine Rückkanal-Datenübertragung via Breitband-Rückkanal vorliegt. Für diesen Fall werden die Rückkanal-Daten, die der Switch vom Server erhält, vom Sitch über den Breitband-Rückkanal zum Endgerät übertragen.

Diese Variante weist den Vorteil auf, daß eine Intelligenz zur Erkennung eines Steuersignals allein im Switch enthalten sein muß. Bei dem Switch handelt es sich bevorzugt um einen Internet Proxy-Server, mit dem das Endgerät kommuniziert. Ein Wechsel zwischen einem Breitband-Rückkanal und einer schmalbandigen Übertragung kann über geeignete Signalisierungsbefehle vom Endgerät an den Switch realisiert werden.

In einer alternativen Ausgestaltung ist die Steuereinheit ein dem Endgerät zugeordneter Proxy-Server, und prüft der Proxy-Server, ob ein durch den Nutzer des Endgerätes oder ein Netzwerkmanagement ausgelöstes Steuersignal zum Übergang auf eine Rückkanal-Datenübertragung via Breitband-Rückkanal vorliegt. Für diesen Fall baut der Proxy-Server über den Breitband-Zugangsswitch eine neue Verbindung zum Server auf und überträgt dem Breitband-Zugangsswitch Steuerbefehle dahingehend, die vom Server erhaltenen Rückkanal-Daten auf den Breitband-Rückkanal zu geben. Der Breitband-Zugangsswitch gibt die vom Server erhaltenen Rückkanal-Daten entsprechend den erhaltenen Steuerbefehlen dann auf den Breitband-Rückkanal.

In einer vorteilhaften Weiterbildung dieser Alternative teilt der Proxy-Server dem Server für den Fall, daß ein Teil der herunterzuladenden Daten vom Endgerät bereits über das Paketvermittlungsnetz empfangen wurde, die Stelle in der herunterzuladenden Datei mit, ab der die Datenübertragung erfolgen soll. Hierdurch wird verhindert, daß bereits heruntergelandene Daten nochmals unnötigerweise heruntergeladen werden.

In einer weiteren Alternative wird eine Verbindung direkt zwischen dem Endgerät und dem Server des Paketvermittlungsnetzes hergestellt, also nicht notwendigerweise unter Zwischenschaltung des Breitband-Zugangsswitchs. Dabei prüfen sowohl der Server als auch der Breitband-Zugangsswitch, ob ein vom Nutzer oder dem Netzwerkmanagement ausgelöstes Steuersignal zum Übergang auf eine Rückkanal-Datenübertragung via Breitband-Rückkanal vorliegt, und es werden für diesen Fall die Rückkanal-Daten vom Server zum Switch übertragen und anschließend vom Switch auf den Breitband-Rückkanal zum Endgerät gegeben.

Diese Variante erfordert eine Intelligenz zur Erkennung entsprechender Steuersignale sowohl beim Breitband-Zugangsswitch als auch beim Server. Auch muß der Server ein Routing dahingehend vornehmen können, daß Rückkanal-Daten nun zunächst zum Switch übertragen werden, sofern dies nicht bereits geschieht. Das Steuersignal kann beispielsweise durch eine bestimmte Bit-Sequenz dargestellt sein, die sowohl der Switch als auch der Server über das Paketvermittlungsnetz erhalten.

In einer vorteilhaften Weiterbildung der Erfindung ist vorgesehen, daß der Nutzer die Bandbreite der über den Breitband-Rückkanal zum Endgerät erfolgenden Datenübertragung einstellen kann. Hierdurch können vom Nutzer bestimmte Geschwindigkeits- bzw. Dienstgüteklassen festgelegt werden, die naturgemäß unterschiedlichen Tarifen unterworfen sind. Die Festlegung der Bandbreite der Datenrückübertragung über den Breitband-Rückkanal erfolgt dabei zieladressenspezifisch.

Bevorzugt kann der Nutzer die Einstellung der Bandbreite der Datenübertragung über den Breitband-Rückkanal dynamisch während einer bestehenden Verbindung vornehmen. Hierdurch wird ein größtmögliches Maß an Individualität zur Verfügung gestellt und es einem Nutzer beispielsweise ermöglicht, einen Downloadvorgang, der länger als erwartet dauert, zu beschleunigen.

Mit Vorteil sind bestimmte maximale Bandbreiten der Datenrückübertragung auf dem Breitband-Rückkanal vorgesehen, zwischen denen der Nutzer während einer Verbindung dynamisch wechseln kann. Zur zieladressenspezifischen Einstellung der Bandbreite der Datenübertragung werden die für eine bestimmte Adresse bestimmten Datenpakete mit einer Geschwindigkeit auf den Breitband-Rückkanal gegeben, die der vom Nutzer ausgewählten Bandbreite entspricht. Die Steuerinformationen zur Auswahl der Bandbreite des Rückkanals werden vom Nutzer als Innenband- oder Außenbandsignale zunächst zum Breitband-Zugangsswitch übertragen und von diesem an eine Bandbreitenregulierungsvorrichtung weitergeleitet, die die Daten mit der gewünschten Bandbreite auf den Breitband-Rückanal gibt.

In einer bevorzugten Ausgestaltung der Erfindung wird der Breitband-Rückkanal durch eine Satelliten-Übertragungsstrecke realisiert. Dabei werden die Rückkanal-Daten vom Switch breitbandig zu einem Satelliten-Uplink bei Vorliegen des entsprechenden Steuersignals übertragen, vom Satelliten-Uplink zu einem Satellit gesandt, vom Satelliten ausgestrahlt, mittels einer Antenne empfangen und zum Endgerät übertragen.

Diese Erfindungsvariante ermöglicht die sinnvolle Nutzung vorhandener hoher Bandbreite bei der Satellitenkommunikation, da durch die Möglichkeit, einen Breitband-Rückkanal nur bei bestimmten Anwendungen zu wählen, die Satellitenkommunikation nicht durch eine Vielzahl schmalbandiger Anwendungen, für die ein schmalbandiger Rückkanal völlig ausreicht, überlastet wird.

Um die für ihn bestimmten Rückkanal-Daten in dem breitbandigen, vom Satelliten gesandten Datenstrom, der die Daten zahlreicher weiterer Nutzer enthält, zu erkennen, wertet das Endgerät die Adreßfelder der über Satellit erhaltenen Datenpakete aus. Die Datenpakete bleiben auf der Satellitenstrecke in ihrer Struktur unverändert, so daß die Header der Datenpakete für eine Zuordnung zum jeweiligen Endgerät ausgewertet werden können.

In einer weiteren Ausgestaltung der Erfindung wird der Breitband-Rückkanal durch eine ADSL-Übertragungsstrecke realisiert, wobei die Rückkanal-Daten breitbandig vom Server zum Switch und mittels ADSL-Technik vom Switch zum Endgerät übertragen werden. Der Switch ist dabei bevorzugt in die dem Endgerät zugeordnete Vermittlungsstelle integriert, wobei der Switch die Daten im ADSL-Band der Teilnehmer-Anschluß-Leitung überträgt bzw. empfängt.

Alternativ wird der Breitband-Rückkanal durch ein Fernsehkabel eines Fernsehkabel-Netzes, ein Stromkabel eines Stromnetzes oder eine breitbandige Mobilfunkstrecke, insbesondere entsprechend dem Standard UMTS (Universal Mobile Telecommunications System), realisiert. Hierzu wird für die Verbindung zwischen dem Switch und dem Endteilnehmer auf geeignete Fernsehkabel-Techniken, Stromnetz-Techniken und Mobilfunk-Techniken zur Datenübertragung zurückgegriffen, die dem Fachmann an sich bekannt sind.

Ein erfindungsgemäßer Switch weist eine Steuereinrichtung auf, die in Abhängigkeit von Steuersignalen eines Nutzer oder eines Netzwerkmanagements ankommende Daten einer Verbindung entweder an eine schmalbandige TK-Infrastruktur wie ein Paketvermittlungsnetz oder eine schmalbandige Teilnehmer-Anschluß-Leitung oder an einen Breitband-Rückkanal leitet.

Die Erfindung ermöglicht eine breitbandige Verbindung zwischen einem Telekommunikations-Teilnehmer und dem von ihm benutzen Teilnehmerzugangs-Netz. Eine breitbandige Teilnehmer-Anschluß-Leitung (TAL) bzw. Subscriber Line (SL) kann dabei als "last mile connection" eine breitbandige Verbindung jedweder Art zwischen einem Teilnehmerzugangs-Netz und einem seiner Netzbenutzer sein. Die breitbandige TAL kann insbesondere über Satellit, Fernsehkabel aus Kupfer oder Aluminium, Glasfaser der unterschiedlichsten Beschaffenheit oder Stromkabel realisiert werden. Erfindungsgemäß kann der Nutzer auf die breitbandige Verbindung wahlweise und dynamisch entsprechend seinen Wünschen und Bedürfnissen zurückgreifen.

### Beschreibung mehrerer Ausführunqsbeispiele

Die Erfindung wird nachfolgend unter Bezugnahme auf die Figuren der Zeichnung an mehreren Ausführungsbeispielen näher erläutert werden. Es zeigen:
- Fig. 1: schematisch ein erstes erfindungsgemäßes Telekommunikationsnetz,
- Fig. 2: ein Ablaufdiagramm eines ersten erfindungsgemäßen Verfahrens;
- Fig. 3: ein Ablaufdiagramm eines zweiten erfindungsgemäßen Verfahrens;
- Fig. 4: schematisch ein zweites erfindungsgemäßes Telekommunikationsnetz;
- Fig. 5: eine schematische Darstellung der Funktionseinheiten eines erfindungsgemäßen Switch,
- Fig. 6: eine Weiterbildung der Anordnung der Fig. 1, wobei zusätzlich eine Bandbreitenregulierungsvorrichtung vorgesehen ist und
- Fig. 7: eine Weiterbildung der Anordnung der Fig. 1, wobei dem Endgerät ein Proxy-Server zugeordnet ist.

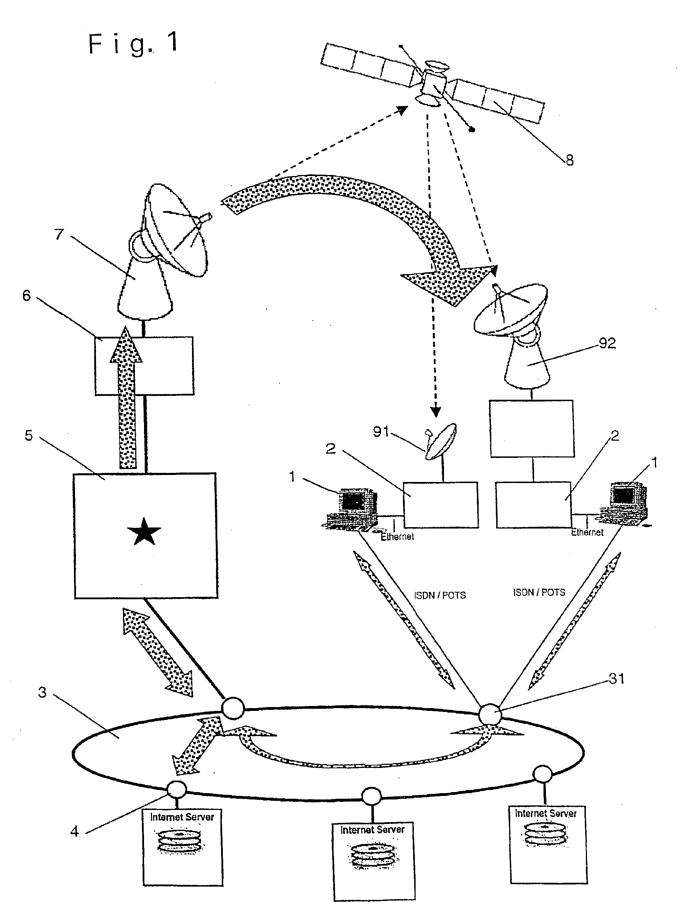

Fig. 1 zeigt ein Kommunikationssystem, bei dem ein Endgerät 1 über eine ISDN/POTS-Leitung schmalbandig an ein Paketvermittlungsnetz, insbesondere das normale Internet 3 angeschlossen ist. Weiter ist das Endgerät 1 über einen Ethernet-Anschluß mit einem Breitband-Empfangssystem 2 verbunden, das über eine Satellitenantenne 91, 92 von einem Satelliten ausgestrahlte Daten empfängt. Das Breitband-Empfangssystem 2 ist dabei optional und das Endgerät 1 kann alternativ auch direkt an die Satellitenantenne 91, 92 angeschlossen sein. Das Breitband-Empfangssystem 2 ist beispielsweise als PC-Karte oder als externe Box ausgebildet.

Bei der Satellitenantenne handelt es sich insbesondere um eine übliche Satellitenschüssel 91 oder die Empfangsstation 92 einer Satelliten-Gemeinschaftsantennenanlage. Auch kann vorgesehen sein, daß die vom Satelliten gesandten Daten von einer Kabelstation empfangen werden, in ein Breitbandnetz, etwa ein Fernseh-Kabelnetz eingespeist und über des Breitbandnetz an das Breitband-Empfangssystem 2 übertragen werden.

Im Internet 3 befinden sich zahlreiche Host-Computer oder Internet-Server 4, zwischen denen der Nutzer eines Endgerätes "surfen" kann. Wenn sich der Nutzer dazu entscheidet, bestimmte Daten von einem Internet-Server 4 herunterzuladen, so besitzt er hierzu zwei Möglichkeiten.

Erstens erfolgt ein Rückkanal zum Endgerät 1 in an sich bekannter Weise wiederum über das Internet 3 und ISDN/POTS-Leitungen. Zweitens werden die herunterzuladenden Daten breitbandig vom Internet-Server 4 an einen Breitband-Zugangsswitch 5 (im folgenden auch als Switch bezeichnet) und vom Switch 5 mit hoher Bandbreite über einen Satellit 8 zum Endgerät übertragen. Hierzu werden die Rückkanal-Daten vom Switch 5 zu einem Satelliten-Uplink 6 übertragen, vom Satelliten-Uplink 6 über eine Satellitenantenne 7 an einen Satelliten 8 gesandt, von diesem ausgestrahlt und über die dem Endgerät 1 zugeordnete Satellitenantenne 91, 92 breitbandig empfangen.

Bei dem Switch 5 handelt es sich insbesondere um einen Internet-Proxy-Server.

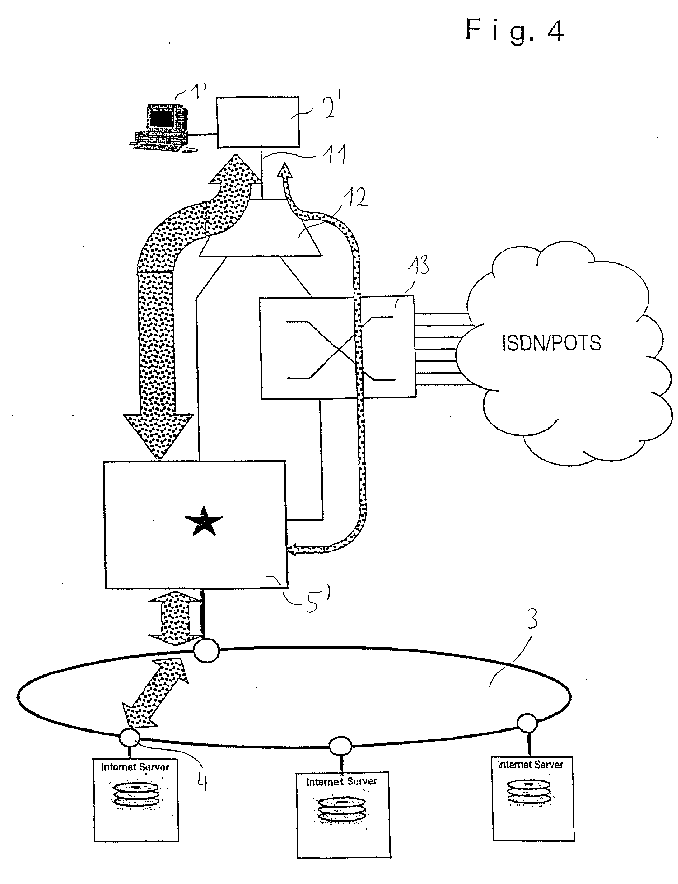

In Figur 1 ist eine Breitbandkommunikation durch dick gezeichnete Pfeile und eine Schmalbandkommunikation durch dünn gezeichnete Pfeile dargestellt. Gleiches gilt für Figur 4.

Die Entscheidung, ob der Rückkanal über Satellit 8 oder über das Internet 3 erfolgt, trifft der Nutzer des Endgerätes 1 oder ein Netzwerkmanagement durch Aussenden geeigneter Steuersignale über das Internet 3. Der Breitband-Zugangsswitch 5 besitzt dabei eine Steuereinrichtung, die in Abhängigkeit von den Steuersignalen des Endgerätes 1 herunterzuladende Daten entweder an das Internet 3 oder mit hoher Bandbreite an den Satelliten-Uplink 6 und damit zum Endgerät 1 überträgt.

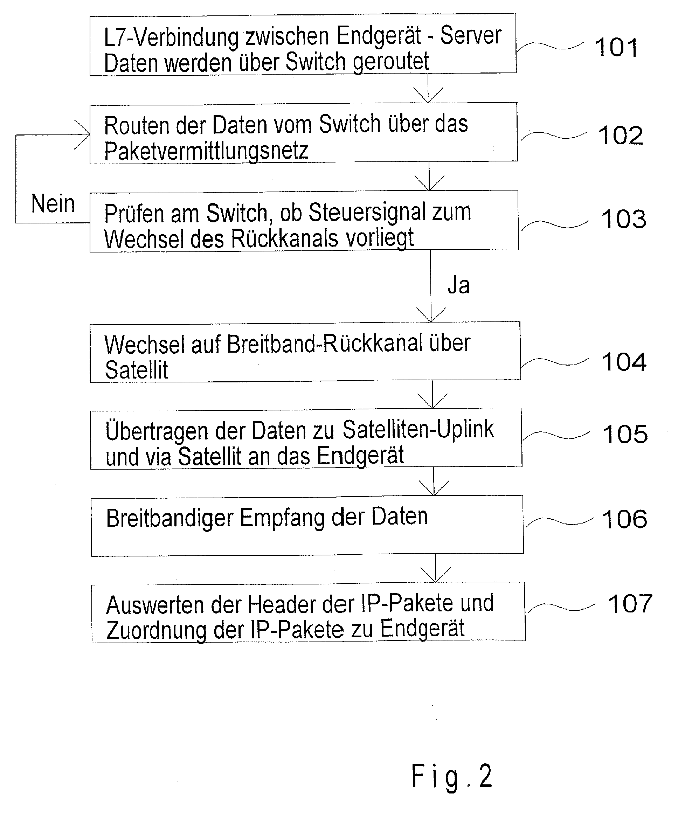

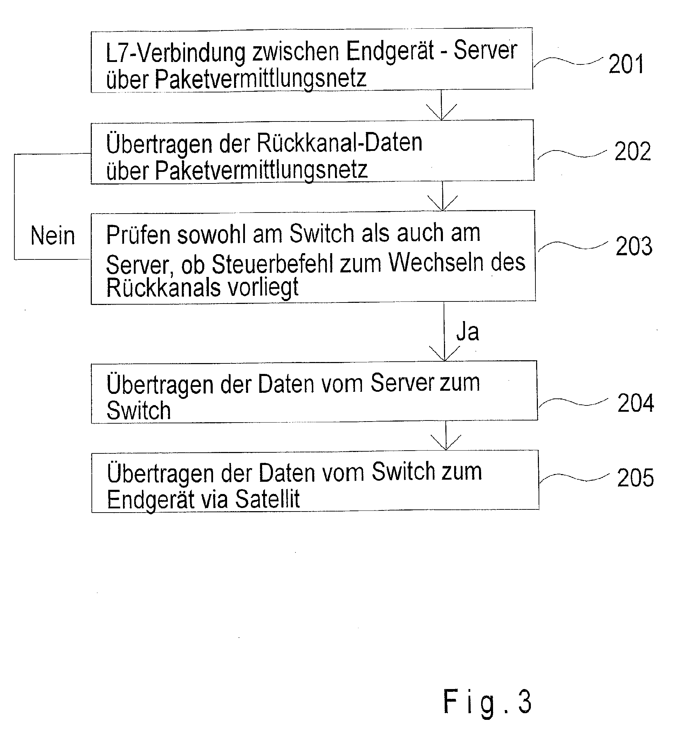

Es stehen drei leicht unterschiedliche Verfahren zur Verfügung, mit denen Rückkanal-Daten über Satellit 8 an das Endgerät 1 übertragen werden, wie im folgenden anhand der Figuren 2 und 3 erläutert wird.

Gemäß Fig. 2 baut das Endgerät 1 in einem ersten Verfahrensschritt 101 eine L7-Verbindung zwischen dem Endgerät 1 und dem Internet-Server 4 auf. Das Endgerät 1 wählt sich hierzu über einen Einwählknoten 31 in das Internet 3 ein. Die L7-Verbindung wird unter Zwischenschaltung des Breitband-Zugangsswitch 5 aufgebaut, der breitbandig mit dem Satelliten-Uplink 6 verbunden ist. Daten vom Endgerät 1 zum Server 4 und vom Server 4 zum Endgerät 1 werden also stets unter Zwischenschaltung des Switches 5 geroutet. Die Datenpakete weisen entsprechende Routing-Informationen auf.

Nach Aufbau der Verbindung werden die Daten des Rückkanals zunächst über das Paketvermittlungsnetz 3 schmalbandig an das Endgerät 1 übertragen (Schritt 102). Da die Rückkanal-Daten über den Switch 5 geroutet werden, ändert der Switch 5 beim Routing gegebenenfalls die IP-Adresse der Datenpakete zur Weiterleitung der Daten an das Endgerät 1.

Der Switch 5 prüft in regelmäßigen Abständen, ob ein durch den Nutzer des Endgerätes 1 ausgelöstes Steuersignal zum Wechseln des Rückkanals auf einen Rückkanal über Satellit vorliegt (Schritt 103). Ein derartiges Steuersignal signalisiert das Endgerät 1 dem Switch 5 beispielsweise im Rahmen eines einfachen Signalisierungsprotokolls; es wird ein entsprechender Befehl als Inband-Signal oder Außenband-Signal an den Switch 5 gesandt. Bei einem ISDN-Endgerät wird etwa auf dem B-Kanal eine bestimmte Bitfolge als Steuersignal an den Switch 5 gesandt.

Es wird darauf hingewiesen, daß das Steuersignal auf vielfältige Art und Weise verwirklicht werden kann, alternativ etwa auch als bestimmte Bit-Sequenz im Datenstrom.

Sobald der Switch 5 ein entsprechendes Steuersignal erhält, wechselt er während der bestehenden L7-Verbindung auf einen Breitband-Rückkanal über den Satelliten 8 (Schritt 104). Der Switch 5 dient insofern als Steuereinheit. Zum Wechseln auf einen Breitband-Rückkanal sendet der Switch 5 in Schritt 105 die Daten breitbandig zu dem Satelliten-Uplink 6, mit dem er etwa über ein Glasfaserkabel verbunden ist. Anschließend werden die Daten vom Satelliten-Uplink 6 breitbandig über den Satelliten 8 und die Satellitenantenne 91, 92 zum Endgerät 1 übertragen.

Statt der üblichen Bandbreite von 10 kbit/s oder auch 64 kbit/s (bei ISDN) über das Internet 3 und die schmalbandige "letzte Mile" vom Internetzugang 31 zum Endgerät erfolgt eine Datenübertragung nun mit einer Bandbreite von beispielsweise 38 Mbit/s.

Es wird darauf hingewiesen, daß bei Übertragen der Rückkanal-Daten vom Switch 5 zum Endgerät 1 über Satellit 8 das Format der Daten als IP-Datenpakete bevorzugt nicht verändert wird. Da das IP-Format der Daten bei der Satellitenübertragung erhalten bleibt, kann das Endgerät 1 die Header der IP-Pakete auswerten und hieran erkennen, welche Daten zu der zum Internet-Server 4 aufgebauten Verbindung, von dem die Daten heruntergeladen werden, gehören (Schritte 106 und 107). Dies ist wichtig, da die breitbandig vom Satelliten empfangenen Signale auch Daten enthalten, die für andere Nutzer bestimmte Daten sind.

Sofern ein Wechsel zurück zu einer schmalbandigen Übertragung über das Paketvermittlungsnetz und ISDN/POTS-Leitungen gewünscht wird, sendet der Nutzer oder das Netzwerkmanagement ein weiteres Steuersignal an den Switch 5, der die herunterzuladenden Daten dann wieder über das Internet 3 routet. Darin liegt gerade der Gedanke der vorliegenden Erfindung, daß ein Nutzer während einer bestehenden L7-Verbindung entsprechend seinen Anforderungen an die Bandbreite, die Qualität und die Kosten der Verbindung dynamisch zwischen einer schmalbandigen Übertragung der Rückkanal-Daten über das Paketvermittlungsnetz 3 und einer breitbandigen Übertragung etwa über Satellit wählen kann.

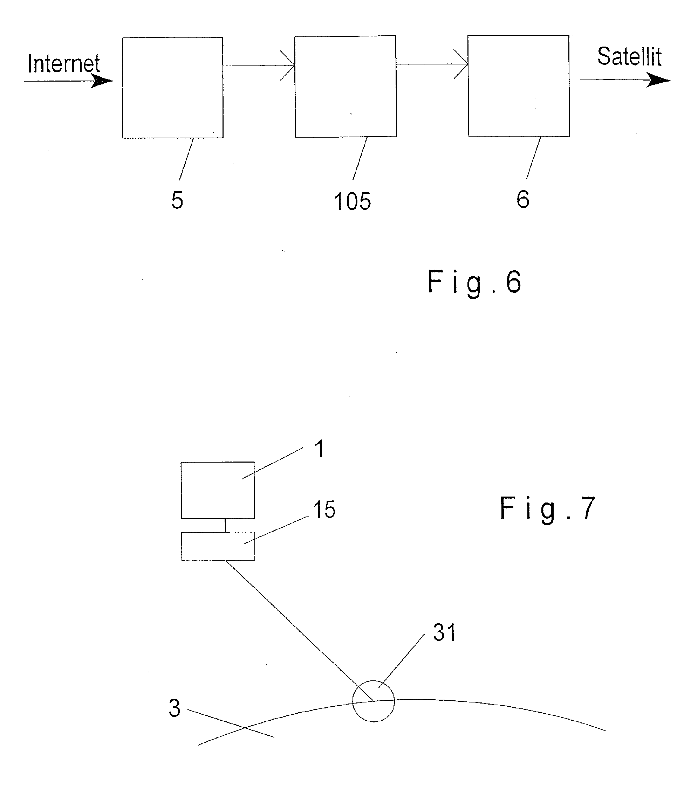

Eine Alternative der in Fig. 1 dargestellten Telekommunikationsanordnung ist in Fig. 7 wiedergegeben, wobei lediglich der Bereich zwischen Endgerät 1 und Zugang 31 zum Paketvermittlungsnetz 3 dargestellt ist. Die übrigen Komponenten des Systems sind unverändert.

In dieser Alternative ist dem Endgerät 1 unmittelbar ein Proxy-Server 15 zugeordnet. Bei einem Proxy-Server handelt es sich um eine Einheit, die Anfragen des Endgeräts 1 bzw. dessen Internet-Browsers entgegennimmt und einen eigenen Speicher (Cache) besitzt, in dem Internet-Seiten bzw. herunterzulandende Daten gespeichert sind. Wenn vom Nutzer angeforderte Internet-Seiten bzw. Daten nicht im Cache enthalten sind, baut der Proxy-Server 15 eine Verbindung zum Herunterladen der gewünschten Information auf. Der Proxy-Server ist beispielsweise als Software am Endgerät 1 installiert. Es kann sich jedoch ebenso um ein eigenständiges Gerät handeln.

Der Proxy-Server baut beim "Surfen" des Nutzers im Internet zunächst eine Verbindung zum einem gewünschten Server 4 über das Paketvermittlungsnetz 3 auf. Eine Datenrückübertragung erfolgt schmalbandig. Das Verfahren verläuft wir in Bezug auf Fig. 1 beschrieben.

Der Proxy-Server 15 prüft dabei ständig, ob ein durch den Nutzer des Endgerätes 1 oder ein Netzwerkmanagement ausgelöstes Steuersignal zum Übergang auf eine Rückkanal-Datenübertragung via Breitband-Rückkanal vorliegt. Für diesen Fall baut der Proxy-Server 15 über den Breitband-Zugangsswitch 5 eine völlig neue Verbindung zum Server 4 auf. Die alte Verbindung zum Server 4 über das schmalbandige Netz kann dabei wahlweise beibehalten oder getrennt werden.

Der Proxy-Server 15 übersendet dem Breitband-Zugangsswitch (5) dabei als Innenband- oder Außenbandsignal Steuerbefehle dahingehend, vom Server (4) erhaltenen Rückkanal-Daten auf den Breitband-Rückkanal zu geben. Dementsprechend gibt der Breitband-Zugangsswitch (5) die vom Server (4) erhaltenen Rückkanal-Daten auf den Breitband-Rückkanal, so daß sie über den Satellit 8 zum Endgerät übertragen werden.

Dabei ist bevorzugt vorgesehen, sofern ein Teil der herunterzuladenden Daten vom Endgerät 1 bereits schmalbandig über das Internet empfangen wurde, dem Server die Stelle in der herunterzuladenden Datei mitzuteilen, ab der die Datenübertragung erfolgen soll. Hierdurch wird ein unnötiges Übertragen bereits beim Endgerät vorhandener Daten vermieden.

Das Verfahren entspricht vom Prinzip her dem Verfahren gemäß Fig. 2, wobei die Prüfung, ob ein Steuersignal zum Übergang auf einen Breitband-Rückkanal vorliegt, vom Proxy--Server 15 vorgenommen wird, der insofern als Steuereinheit dient.

In einem weiteren alternativen Verfahren wird gemäß Fig. 3 in einem ersten Schritt 201 direkt eine L7-Verbindung zwischen dem Endgerät 1 und dem Internet-Server 4 aufgebaut, wobei diese Verbindung nicht notwendigerweise unter Zwischenschaltung des Switches 5 erfolgt. Herunterzuladende Rückkanal-Daten werden zunächst über das Paketvermittlungsnetz 3 und die ISDN/POTS-Leitungen an das Endgerät 1 übertragen (Schritt 202).

Es prüfen nun in Schritt 203 in regelmäßigen Abständen (etwa 1 ms) sowohl der Internet-Server 4 als auch der Switch 5, ob ein vom Nutzer des Endgerätes 1 ausgelöstes Steuersignal zum Wechsel des Rückkanals vorliegt. Als Steuersignal dient beispielsweise eine bestimmte Bit-Sequenz, die über das Internet 3 vom Endgerät sowohl an den Switch 5 als auch den Internet-Server 4 gesandt wird.

Bei Vorliegen eines entsprechenden Steuersignals überträgt der Server 4 herunterzuladende Rückkanal-Daten nun breitbandig an den Switch 5, sofern das nicht bereits ohnehin der Fall war (Schritt 204). Vom Switch 5 werden die Rückkanal-Daten dann wie in bezug auf Figur 2 beschrieben über den Satelliten 8 breitbandig zum Endgerät 1 übertragen (Schritt 205).

Bei dieser Variante sind sowohl im Internet-Server 4 als auch im Switch 5 Mittel zum Erkennen eines Steuersignals und Mittel zu einem entsprechenden Routen der Rückkanal-Daten vorgesehen.

Es wird darauf hingewiesen, daß eine breitbandige Übertragung der Rückkanal-Daten vom Server 4 zum Switch 5 kein Problem darstellt, da Server und Switches des Internet in der Regel breitbandig, etwa über Glasfasernetze, miteinander verbunden sind.

In einer leichten Abwandlung der beschriebenen Verfahren ist vorgesehen, den Breitband-Rückkanal zu der schmalbandigen Übertragung über das Internet 3 hinzuzuschalten, ohne die Übertragung über das Internet 3 abzubrechen. Dabei werden die weiterhin über das Internet 3 übersandten Daten bevorzugt beim Empfänger bzw. einer diesem vorgelagerten Vermittlungsstelle unterdrückt bzw. mißachtet, da sie nicht gebraucht werden. In einer anderen Variante werden über das Internet andere Daten übertragen als über den Breitband-Rückkanal.

Eine Weiterbildung der in Fig. 1 dargestellten Telekommunikationsanordnung ist in Fig. 6 wiedergegeben, wobei lediglich der Bereich zwischen Breitband-Zugangsswitch 5 und Satelliten-Uplink 6 dargestellt ist. Die übrigen Komponenten des Systems sind unverändert.

Zwischen Switch 5 und Satelliten-Uplink 6 ist eine Bandbreitenregulierungsvorrichtung 105 angeordnet, mit deren Hilfe der Nutzer des Endgeräts 1 die Bandbreite der über den Satellit 8 an das Endgerät 1 erfolgenden Datenübertragung einstellen kann. Es wird ihm hierdurch ermöglicht, bestimmte Geschwindigkeits- bzw. Dienstgüteklassen einzustellen. Der Wechsel zwischen verschiedenen Bandbreiten bzw. Dienstgüteklassen kann dynamisch während einer bestehenden Verbindung erfolgen. Dies ermöglicht dem Nutzer, auch während einer Verbindung die Übertragungsgeschwindigkeit zu ändern.

Die Bandbreitenregulierungsvorrichtung 105 stellt zieladressenspezifisch die Bandbreite der Datenübertragung an eine bestimmte Zieladresse ein. Hierzu prüft die Bandbreitenregulierungsvorrichtung 105 die Adresse der ankommenden Daten, die in der Regel in Datenpaketen angeordnet sind, und gibt die zu einer bestimmten Adresse gehörenden Daten bzw. Datenpakete nur mit einer Geschwindigkeit an den Satelliten-Uplink 6 weiter, die der vom Nutzer vorgegebenen Bandbreite entspricht. Hierdurch wird eine bestimmte Geschwindigkeitsstufe eingestellt. Mit der eingestellten Bandbreite werden die Daten vom Satelliten-Uplink zum Satellit 8 und weiter bis zum Endgerät 1 übertragen.

Es sei an dieser Stelle darauf hingewiesen, daß die Bezeichnung "Endgerät" beispielhaft für irgendeine Kommunikations-Endeinrichtung zu verstehen ist. Es kann sich bei dem "Endgerät" beispielsweise ebenso um eine Telekommunikationsanlage handeln, die ein internes Firmennetz bedient.

Zur Steuerung der vom Nutzer gewünschten Bandbreite des Breitband-Rückkanals sendet dieser mittels einer Inbandoder Außenbandsignalisierung entsprechende Steuerbefehle an den Switch 5, der diese Signalisierungsinformationen an die Bandbreitenregulierungsvorrichtung 105 weiterleitet. Die Steuerinformationen betreffen die Information, zu einer bestimmten Adresse eine bestimmte Bandbreite einzustellen.

Die Bandbreitenregulierungsvorrichtung 105 erfaßt die Adresseninformationen der eingehenden Datenpakete und überprüft fortlaufend, und damit auch während einer bestehenden Verbindung, ob zu einer bestimmten Adresse eine bestimmte, maximale Bandbreite ausgewählt wurde. Für diesen Fall werden die Daten bzw. Datenpakete mit einer entsprechenden Geschwindigkeit an den Satelliten-Uplink 6 weitergeleitet.

Alternativ können die Steuersignale auch von einem Managementsystem übersandt werden, das beispielsweise sicherzustellen hat, daß die maximalen Gebühren des Teilnehmers in einem bestimmten Zeitraum, wie einem Monat, einen vorgegebenen Betrag nicht oder nicht wesentlich überschreiten.

Die Bandbreitenregulierungsvorrichtung 105 ist in einer Ausgestaltung der Erfindung in den Breitband-Zugangsswitch 5 integriert.

Figur 4 zeigt ein zweites erfindungsgemäßes Kommunikationssystem, bei dem im Vergleich zu dem Kommunikationssystem der Figur 1 der breitbandige Rückkanal nicht durch eine Satellitenstrecke, sondern durch eine ADSL-Übertragungsstrecke realisiert wird.

Ein Endgerät 1' ist über ein Breitband-Empfangssystem 2' (hier: ein ADSL-Modem, das als Karte oder externe Box ausgeführt ist) und eine ADSL-betriebene Teilnehmeranschluß-Kupferleitung 11 an eine Vermittlungsstelle angeschlossen. Die Vermittlungsstelle weist u.a. einen Frequenz-Splitter 12, ein Koppelfeld 13 und einen Switch 5' auf, der mit einem Paketvermittlungsnetz 3 bzw. Servern 4 des Paketvermittlungsnetzes 3 breitbandig verbunden ist.

Der Frequenz-Splitter 12 trennt das Sprachband und das ADSL-Band der ADSL-Leitung 11 und ist bezüglich der hochfrequenten Signale des ADSL-Bands breitbandig mit dem Switch 5' und bezüglich der niederfrequenten Signale des Sprachbands schmalbandig mit dem Koppelfeld 13 verbunden. Das Koppelfeld 13 weist in bekannter Weise zahlreiche Ein-/Ausgänge zu einem ISDN/POTS Netz auf. Weiter ist es schmalbandig mit dem Switch 5' verbunden.

Es wird beispielsweise zunächst über das Koppelfeld 13 und den Switch 5' eine Verbindung zu einem Server 4 des Internets 3 aufgebaut und werden Rückkanal-Daten schmalbandig heruntergeladen. Die Übertragung der Rückkanal-Daten bis zum Switch 5' erfolgt dabei breitbandig. Die Schmalbandigkeit entsteht aufgrund der Übertragung der Daten vom Switch 5' zum Endgerät 1' über das Koppelfeld 13 und das Sprachband der ADSL-betriebenen Teilnehmeranschlußleitung 11.

Bei Vorliegen eines entsprechenden Steuersignals des Nutzes oder eines Netzwerkmanagements werden die Rückkanal-Daten vom Switch 5 nicht mehr an das Koppelfeld 13, sondern breitbandig direkt an den Frequenz-Splitter 12 und gemäß üblichen ADSL-Übertragungsverfahren über die ADSL-betriebene Teilnehmeranschluß-Kupferleitung 11 an das Endgerät 1' übertragen. Dabei kann eine Bandbreite von bis zu 8 Mbit/s zur Verfügung gestellt werden. Bei einem weiteren Steuerbefehl erfolgt erneut eine schmalbandige Übertragung über das Koppelfeld 13, so daß der Nutzer wiederum entsprechend seinen Wünschen zwischen einem breitbandigen und einem schmalbandigen Rückkanal wechseln kann.

Dieses alternative Kommunikationssystem stellt im Teilnehmerzugangs-Netz einen Breitband-Rückkanal zum Endgerät 1' zur Verfügung, ermöglicht insbesondere wahlweise eine breitbandige Überbrückung der schmalbandigen "letzten Meile" zum Endgerät.

Es wird darauf hingewiesen, daß der Switch auch außerhalb der Vermittlungsstelle angeordnet sein kann, bei grundsätzlich gleicher Verbindung zum Koppelfeld 13 und Frequenz-Splitter 12.

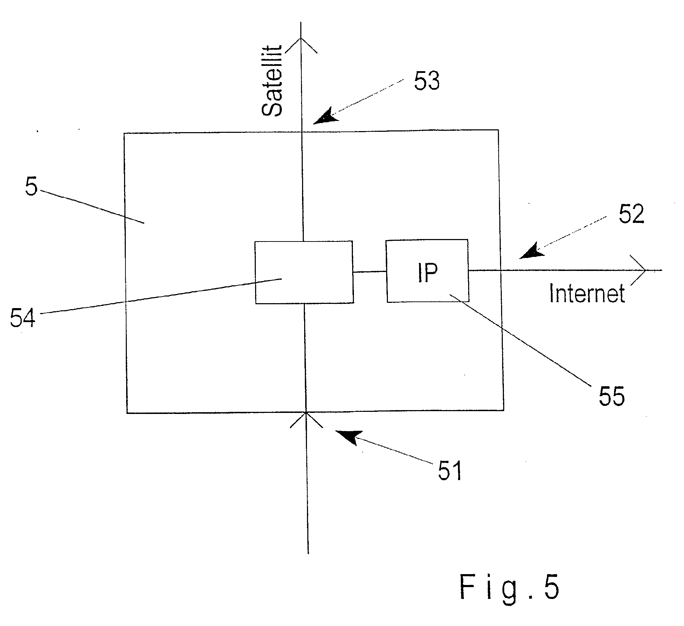

In Figur 5 ist ein erfindungsgemäßer Switch 5 dargestellt, wie er bei dem Verfahren gemäß Figuren 2 und 3 verwendet wird. Der Switch 5 weist einen Eingang 51 zum Paketvermittlungsnetz 3, einen Ausgang 52 zum Paketvermittlungsnetz 3 und einen Ausgang 53 zu einem Breitband-Rückkanal, etwa eine Satellitenübertragung, auf. Eine Steuereinrichtung 54 legt in Abhängigkeit von den Vorgaben des Nutzers fest, ob über den Eingang 51 vom Paketvermittlungsnetz erhaltene Daten über das Paketvermittlungsnetz (Ausgang 52) oder über einen Breitband-Rückkanal (Ausgang 53) weitergeleitet werden. Hierzu weist die Steuereinrichtung 54 Mittel zum Auswerten entsprechender Steuersignale auf. Die Steuereinrichtung wird bevorzugt durch einen Mikroprozessor und geeignete Software gebildet.

Zwischen der Steuereinrichtung 54 und dem Ausgang 52 zum Paketvermittlungsnetz ist ein IP-Router 55 angeordnet, der die übliche Funktionalität eines IP-Routers bzw. IP-Switches aufweist und Datenpakete an das Internet 3 routet.

Die Eingänge und Ausgänge 51, 52, 53 des Switchs 5 sind auch in umgekehrter Richtung als Eingänge 52, 53 und Ausgang 51 betreibbar, je nach Richtung der Datenübertragung.

Bei der Steuereinrichtung 54 handelt es sich im wesentlichen um einen logischen Schalter, der die ankommenden Datenpakete in Abhängigkeit von den Steuerbefehlen des Nutzers entweder zu dem IP-Router 55 oder über den Ausgang 53 auf den Breitband-Rückkanal, etwa eine Glasfaserstrecke zu einem Satelliten-Uplink, leitet. Darüber hinaus werden jedoch auch Signalisierungsaufgaben wahrgenommen, soweit sie zur Übertragung der Daten über den Breitband-Rückkanal erforderlich sind. Etwa wird bei einem ADSL-Rückkanal in an sich bekannter Weise eine Signalisierung nach dem Protokoll SS7 zu der dem Endgerät zugeordneten Ortsvermittlungsstelle vorgenommen.

In einer alternativen Anordnung des Switches 5 ist dieser an seinem Ausgang 52 nicht notwendigerweise an ein Paketvermittlungsnetz angeschlossen, sondern an eine beliebige schmalbandige TK-Infrastruktur, etwa ein Koppelfeld einer Ortsvermittlungsstelle (vgl. Fig. 4).

Die Erfindung beschränkt sich in ihrer Anwendung nicht auf die vorstehend genannten Ausführungsbeispiele. Wesentlich für die Erfindung ist allein, daß Daten wahlweise schmalbandig über ein Paketvermittlungsnetz und/oder POTS/ISDN-Leitungen oder breitbandig über einen Breitband-Rückkanal übertragen werden, wobei geeignete TK-Infrastruktur prüft, ob ein durch den Nutzer eines Endgerätes oder ein Netzwerkmanagement ausgelöstes Steuersignal zum Übergang auf eine Rückkanal-Datenübertragung via Breitband-Rückkanal vorliegt und für diesen Fall eine Datenübertragung via Breitband-Rückkanal erfolgt.

## Patentansprüche

1. Verfahren zur Übertragung von Rückkanal-Daten in einer Verbindung zwischen einem Endgerät und einem Server eines Paketvermittlungsnetzes, zumindest auf einer Teilstrecke des Rückkanals wahlweise schmalbandig über das Paketvermittlungsnetz und/oder POTS/ISDN-Leitungen oder breitbandig über einen Breitband-Rückkanal, mit folgenden Schritten:
a) Aufbau einer Verbindung zwischen dem Endgerät (1) und dem Server (4) über das Paketvermittlungsnetz (3),
b) schmalbandiges Übertragen von Rückkanal-Daten vom Server (4) zum Endgerät (1);
c) wiederholtes Prüfen beim Server (4) und/oder einer Steuereinheit (5, 15), die Teil des Paketvermittlungsnetzes (3) ist oder zu diesem Zugang hat, ob ein durch den Nutzer des Endgerätes (1) oder ein Netzwerkmanagement ausgelöstes Steuersignal zum Übergang auf eine Rückkanal-Datenübertragung via Breitband-Rückkanal vorliegt,
d) Wechseln auf eine Übertragung via Breitband-Rückkanal während der bestehenden Verbindung bei Vorliegen eines entsprechenden Steuersignals, oder Zuschalten eines derartigen Kanals, wobei die Rückkanal-Daten zunächst breitbandig vom Server (4) zu einem Breitband-Zugangsswitch (5) übertragen und dann vom Breitband-Zugangsswitch (5) auf den Breitband-Rückkanal gegeben werden,
e) Zurückwechseln auf eine schmalbandige Übertragung der Rückkanal-Daten, sofern ein entsprechendes weiteres Steuersignal des Nutzers oder des Netzwerkmanagements vorliegt.

2. Verfahren nach Anspruch 1, bei dem die Steuereinheit gleich dem Breitband-Zugangsswitch (5) ist und eine Verbindung zwischen dem Endgerät und dem Server stets unter Zwischenschaltung des Breitband-Zugangsswitches (5) hergestellt wird, insbesondere Daten vom Endgerät zum Server und vom Server zum Endgerät unter Zwischenschaltung des Breitband-Zugangswitches übertragen werden, wobei
a) der Breitband-Zugangsswitch (5) prüft, ob ein durch den Nutzer des Endgerätes (1) oder ein Netzwerkmanagement ausgelöstes Steuersignal zum Übergang auf eine Rückkanal-Datenübertragung via Breitband-Rückkanal vorliegt, und
b) die vom Server (4) erhaltenen Rückkanal-Daten für diesen Fall vom Breitband-Zugangsswitch (5) über den Breitband-Rückkanal zum Endgerät (1) übertragen werden.

3. Verfahren nach Anspruch 2, bei dem das Steuersignal zum Übergang auf einen Breitband-Rückkanal bzw. zum Übergang auf eine schmalbandige Übertragung im Rahmen eines Signalisierungsprotokolls zwischen dem Endgerät (1) und dem Switch (5) übertragen wird.

4. Verfahren nach Anspruch 1, bei dem die Steuereinheit ein dem Endgerät (1) zugeordneter Proxy-Server (15) ist, und
a) der Proxy-Server (15) prüft, ob ein durch den Nutzer des Endgerätes (1) oder ein Netzwerkmanagement ausgelöstes Steuersignal zum Übergang auf eine Rückkanal-Datenübertragung via Breitband-Rückkanal vorliegt,
b) der Proxy-Server (15) für diesen Fall über den Breitband-Zugangsswitch (5) eine neue Verbindung zum Server (4) aufbaut und dem Breitband-Zugangsswitch (5) Steuerbefehle dahingehend überträgt, vom Server (4) erhaltene Rückkanal-Daten auf den Breitband-Rückkanal zu geben und
c) der Breitband-Zugangsswitch (5) die vom Server (4) erhaltenen Rückkanal-Daten entsprechend den erhaltenen Steuerbefehlen auf den Breitband-Rückkanal gibt.

5. Verfahren nach Anspruch 4, bei dem der Proxy-Server (15) dem Server (4) für den Fall, daß ein Teil der herunterzuladenden Daten vom Endgerät (1) bereits über das Paketvermittlungsnetz empfangen wurden, die Stelle in der herunterzuladenden Datei mitteilt, ab der die Datenübertragung erfolgen soll.

6. Verfahren nach Anspruch 1, bei dem eine Verbindung direkt zwischen dem Endgerät und dem Server des Paketvermittlungsnetzes hergestellt wird, wobei
a) sowohl der Server (4) als auch der Breitband-Zugangsswitch (5) prüfen, ob ein vom Nutzer oder Netzwerkmanagement ausgelöstes Steuersignal zum Übergang auf eine Rückkanal-Datenübertragung via Breitband-Rückkanal vorliegt, und für diesen Fall
b) die Rückkanal-Daten vom Server (4) zum Breitband-Zugangsswitch (5) übertragen und anschließend vom Breitband-Zugangsswitch (5) auf den Breitband-Rückkanal zum Endgerät (1) gegeben werden.

7. Verfahren nach mindestens einem der vorangehenden Ansprüche, bei dem das Steuersignal durch eine bestimmte Bit-Sequenz dargestellt wird.

8. Verfahren nach mindestens einem der vorangehenden Ansprüche, bei dem die Rückkanal-Daten bei der Übertragung über Breitband-Rückkanal in Ihrem Format als Datenpakete erhalten bleiben.

9. Verfahren nach mindestens einem der vorangehenden Ansprüche, bei dem der Nutzer die Bandbreite der über den Breitband-Rückkanal zum Endgerät erfolgenden Datenübertragung einstellen kann.

10. Verfahren nach Anspruch 9, bei dem eine Einstellung der Bandbreite der Datenübertragung über den Breitband-Rückkanal dynamisch während der bestehenden Verbindung erfolgt.

11. Verfahren nach Anspruch 9 oder 10, bei dem bestimmte maximale Bandbreiten der Datenrückübertragung auf dem Breitband-Rückkanal vorgesehen sind, zwischen denen der Nutzer während einer Verbindung dynamisch wechseln kann.

12. Verfahren nach mindestens einem der Ansprüche 9 bis 11, bei dem zur zieladressenspezifischen Einstellung der Bandbreite der Datenübertragung die für eine bestimmte Adresse bestimmten Datenpakete mit einer Geschwindigkeit auf den Breitband-Rückkanal gegeben werden, die der vom Nutzer ausgewählten Bandbreite entspricht.

13. Verfahren nach mindestens einem der vorangehenden Ansprüche, bei dem der Breitband-Rückkanal durch eine Satelliten-Übertragungsstrecke realisiert wird, wobei ein Übertragen der Daten vom Breitband-Zugangsswitch (5) zum Endgerät via Satellit die folgenden Schritte beeinhaltet:
a) Breitbandiges Übertragen der Rückkanal-Daten vom Breitband-Zugangsswitch (5) zu einem Satelliten-Uplink (6) bei Vorliegen des entsprechenden Steuersignals,
b) Senden der Daten vom Satelliten-Uplink (6) zu einem Satellit (8),
c) Ausstrahlung der Daten vom Satelliten (8) und
d) Empfang der Daten und Übertragen der Daten zum Endgerät (1).

14. Verfahren nach Anspruch 12 und 13, bei dem die Rückkanal-Daten zwischen Breitband-Zugangsswitch (5) und Satelliten-Uplink (6) eine Bandbreitenregulierungsvorrichtung (105) durchlaufen, die jeweils für eine bestimmte Adresse bestimmten Datenpakete mit einer Geschwindigkeit zum Satelliten-Uplink (6) überträgt, die der vom Nutzer für den Rückkanal ausgewählten Bandbreite entspricht.

15. Verfahren nach mindestens einem der vorangehenden Ansprüche, bei dem das Endgerät (1) die Adreßfelder der über Satellit erhaltenen Datenpakete auswertet, um die für ihn bestimmten Daten zu erkennen.

16. Verfahren nach mindestens einem der Ansprüche 13 bis 15, bei dem die vom Satellit (8) ausgestrahlten Daten mittels einer dem Endgerät (1) zugeordneten Sattelitenschüssel (91, 92) empfangen werden.

17. Verfahren nach mindestens einem der Ansprüche 11 bis 13, bei dem die vom Satellit ausgestrahlten Daten mittels einer Kabelkopfstation eines Kabelbetreibers empfangen, in das entsprechende Kabelnetz eingegeben und über Kabel vom Endgerät empfangen werden.

18. Verfahren nach mindestens einem der Ansprüche 1 bis 12, bei dem der Breitband-Rückkanal durch eine ADSL-Übertragungsstrecke realisiert wird, wobei ein Übertragen der Rückkanal-Daten zum Endgerät die folgenden Schritte beeinhaltet:
a) Breitbandiges Übertragen der Rückkanal-Daten vom Server (4) zum Breitband-Zugangsswitch (5') und
b) Übertragen der Rückkanal-Daten vom Switch (5') zum Endgerät (1') mittels ADSL-Technik.

19. Verfahren nach Anspruch 18, bei dem der Breitband-Zugangsswitch in die dem Endgerät (1') zugeordnete Vermittlungsstelle integriert ist, wobei der Switch (5') die Daten im ADSL- Band der Teilnehmer-Anschluß-Leitung überträgt bzw. empfängt.

20. Verfahren nach mindestens einem der Ansprüche 1 bis 12, bei dem der Breitband-Rückkanal vom Breitband-Zugangsswitch (5) zum Endgerät (1) durch ein Fernsehkabel eines Fernsehkabel-Netzes realisiert wird.

21. Verfahren nach mindestens einem der Ansprüche 1 bis 12, bei dem der Breitband-Rückkanal vom Breitband-Zugangsswitch (5) zum Endgerät (1) durch ein Stromkabel eines Stromnetzes realisiert wird.

22. Verfahren nach mindestens einem der Ansprüche 1 bis 12, bei dem der Breitband-Rückkanal vom Breitband-Zugangsswitch (5) zum Endgerät (1) durch eine breitbandige Mobilfunkstrecke, insbesondere entsprechend dem Standard UMTS realisiert wird.

23. Switch zur Durchführung des Verfahrens nach Anspruch 1 mit einer Steuereinrichtung (54), die in Abhängigkeit von Steuersignalen eines Nutzer eines Endgeräts (1) oder eines Netzwerkmanagements ankommende Daten einer Verbindung entweder an eine schmalbandige TK-Infrastruktur oder an einen Breitband-Rückkanal leitet.

24. Switch nach Anspruch 23, der die Daten bei einer schmalbandigen Übertragung an ein Paketvermittlungsnetz leitet.

25. Switch nach Anspruch 23, der die Daten bei einer schmalbandigen Übertragung an eine schmalbandige Teilnehmer-Anschluß-Leitung, insbesondere eine POTS/ISDN Leitung leitet.

26. Switch nach mindestens einem der Ansprüche 23 bis 25, bei dem die Steuereinrichtung (54) Mittel zum Erkennen und Auswerten von Steuersignalen aufweist.

27. Switch nach mindestens einem der Ansprüche 23 bis 26, wobei dem Switch (5) eine Bandbreitenregulierungsvorrichtung (105) zugeordnet ist, die zur zieladressenspezifischen Einstellung der Bandbreite der Datenübertragung über den Breitband-Rückkanal die für eine bestimmte Adresse bestimmten Datenpakete mit einer Geschwindigkeit an den Breitband-Rückkanal leitet, die einer vom Nutzer ausgewählten Bandbreite entspricht.
